Europäisches Patentamt

European Patent Office

Office européen des brevets

(11) Numéro de publication: **0 069 662**
**A1**

## (12) DEMANDE DE BREVET EUROPEEN

(21) Numéro de dépôt: **82401241.3**

(22) Date de dépôt: **01.07.82**

(51) Int. Cl.³: **A 01 K 39/00**
**A 01 K 5/02**

(30) Priorité: **02.07.81 FR 8113028**

(43) Date de publication de la demande:
**12.01.83 Bulletin 83/2**

(84) Etats contractants désignés:
**AT BE CH DE FR GB IT LI LU NL SE**

(71) Demandeur: **AVINOV**
**"Les Heudinières"**
**F-50420 Saint Vigor des Monts(FR)**

(72) Inventeur: **Chardine, Raymond André**
**Route de Saint Lo**
**F-50420 Tessy sur Vire(FR)**

(74) Mandataire: **Lemoine, Robert et al,**
**Cabinet Malémont 42, Avenue du Président Wilson**
**F-75116 Paris(FR)**

(54) **Dispositif pour la distribution de produit en vrac, notamment d'aliment pour volailles.**

(57) Le dispositif de distribution selon l'invention comprend une trémie (9) pour le stockage du produit, une goulotte de distribution (10) dont l'entrée communique avec la trémie et dont la sortie débouche au-dessus du fond d'une mangeoire (4) et des moyens (6, 8) pour déplacer la trémie et la goulotte le long de la mangeoire. La sortie de la goulotte est fermée par une paroi perforée (11) comportant au moins un orifice (12) balayé par un volet (13) situé à l'intérieur de la goulotte, ce volet étant déplaçable alternativement contre la paroi perforée (11).

Pour l'alimentation d'animaux élevés en batterie.

FIG. 2

EP 0 069 662 A1

Croydon Printing Company Ltd.

# Dispositif pour la distribution de produit en vrac, notamment d'aliment pour volailles

La présente invention concerne un dispositif pour la distribution de produit en vrac, notamment d'aliment pour volailles, du type comprenant une trémie pour le stockage du produit, une goulotte de distribution dont l'entrée communique avec la trémie et dont la sortie débouche au-dessus du fond d'une mangeoire, et des moyens pour déplacer la trémie et la goulotte le long de la mangeoire.

Il est très difficile, avec les dispositifs de distribution actuels de ce type, de régler avec précision la quantité de produit s'écoulant dans la mangeoire pendant le déplacement de la trémie et de la goulotte.

L'expérience montre en effet que le débit du produit délivré par ces dispositifs est systématiquement soit trop faible soit trop grand. Ainsi, lorsque le produit à distribuer est un aliment pour animaux, il arrive fréquemment que ceux-ci ne disposent pas d'une nourriture suffisante pour qu'ils puissent se développer normalement, ou au contraire qu'ils soient suralimentés et gaspillent une partie notable de leur nourriture.

La présente invention se propose de remédier à ces inconvénients et, pour ce faire, elle a pour objet un dispositif de distribution du type précité qui se caractérise en ce que la sortie de la goulotte est fermée par une paroi perforée comportant au moins un orifice balayé par un volet situé à l'intérieur de la goulotte, ce volet étant déplaçable alternativement contre la paroi perforée.

La quantité de produit sortant de la goulotte est maintenant celle qui est strictement nécessaire pour compenser la quantité de produit manquant dans la mangeoire. Lors du déplacement de la goulotte, la paroi perforée effectue un aplanissement grossier de la couche de produit contenue dans la mangeoire. Elle contraint en effet les particules de produit formant des surépaisseurs à venir dans les dépressions adjacentes pour les combler au moins partiellement. Par suite, la quantité de produit traversant l'orifice de la paroi perforée sous l'action du volet est celle qui est strictement nécessaire pour combler entièrement les dépressions et uniformiser l'épaisseur de la couche de produit reposant sur le fond de la mangeoire.

De préférence, la paroi perforée comporte deux orifices de même section, réalisés dans ou à proximité de sa partie médiane. Le produit ne peut évidemment sortir de la goulotte que lorsque la face supérieure de la couche qui est déposée sur le fond de la mangeoire est à un niveau inférieur à celui des orifices ménagés dans la paroi perforée.

Selon un mode de réalisation particulier de l'invention, le volet repose contre la face interne de la paroi perforée et comporte deux trous de même section ménageant avec les orifices de ladite paroi perforée un passage dont la section demeure constamment égale à celle de l'un de ces orifices. Le volet ne peut donc pas obstruer à un moment ou à un autre le passage réservé au produit, ce qui garantit la formation d'une couche de produit dont l'épaisseur demeure rigoureusement constante d'un bout à l'autre de la mangeoire.

Selon ce mode de réalisation particulier, les trous du volet et les orifices de la paroi perforée sont circulaires et ont le même diamètre, l'espacement des trous étant égal à leur diamètre augmenté de l'espacement des orifices.

En outre, la paroi perforée et le volet sont constitués par des plaques de forme cylindrique dont les génératrices sont perpendiculaires à l'axe longitudinal de la mangeoire, la partie médiane de la paroi perforée étant celle qui est la plus proche du fond de la mangeoire.

Selon un autre mode de réalisation de l'invention, le volet est constitué par une plaque verticale portant des pattes latérales s'étendant au dessus de la paroi perforée et dont au moins l'une d'entre elles prend appui contre celle-ci.

Cette disposition permet une réduction sensible des forces de frottement entre le volet et la paroi perforée, ce qui facilité la commande du volet.

Selon cet autre mode de réalisation, les pattes ont sensiblement la forme d'un U dont la base est située à une hauteur inférieure à celle de la face inférieure de la plaque verticale.

Par ailleurs, la paroi perforée et la face inférieure de la plaque verticale sont de forme cylindrique et sont centrées sur le même point, les génératrices de la paroi perforée étant perpendiculaires à l'axe longitudinal de la mangeoire, tandis que sa partie médiane est celle qui est la plus proche du fond de ladite mangeoire.

Dans les deux modes de réalisation présentés ci-dessus, le volet est fixé à l'extrêmité inférieure d'un bras porté par un arbre situé à l'intérieur de la trémie, cet arbre pivotant sous la commande d'une tige reliée à un système bielle-manivelle situé à l'extérieur de la trémie.

La solution proposée pour commander le volet est évidemment très simple.

D'autre part, lorsque la mangeoire est relativement large, la goulotte peut avantageusement porter au moins un racloir extérieur dont le côté inférieur est situé dans ou sensiblement dans le plan transversal médian de la paroi perforée.

Un mode d'exécution de la présente invention sera décrit ci-après à titre d'exemple nullement limitatif en référence aux dessins annexés dans lesquels :

- la figure 1 est une vue latérale schématique d'une batterie d'élevage d'animaux, notamment de volailles, cette batterie comportant deux dispositifs de distribution conformes à l'invention;

- la figure 2 est une vue en coupe schématique effectuée suivant la ligne II-II de la figure 1;

- la figure 3 est une vue en coupe effectuée suivant la ligne III-III de la figure 2; .

- la figure 4 est une vue en coupe effectuée suivant la ligne IV-IV de la figure 3;

- la figure 5 est une vue en coupe schématique montrant une variante de réalisation du volet visible sur les figures 1 à 4; et

- la figure 6 est une vue en coupe effectuée suivant la ligne VI-VI de la figure 5;

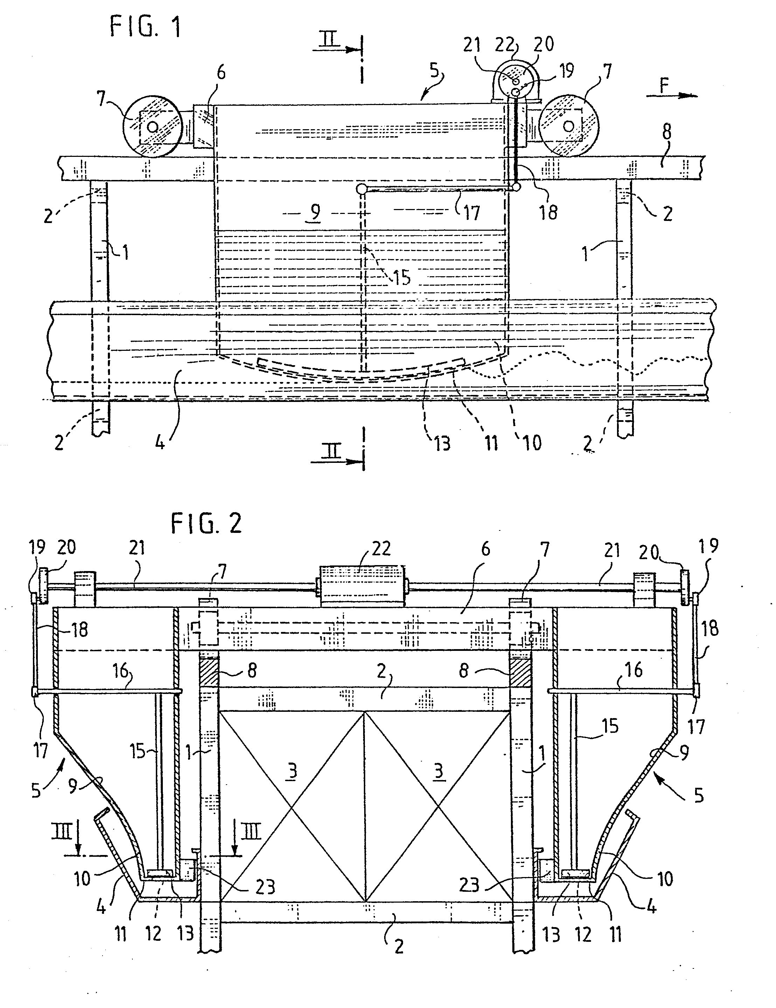

La batterie d'élevage que l'on peut voir sur les figures 1 et 2 comporte un bâti constitué de montants verticaux 1 et de traverses horizontales 2, deux séries de cages 3 disposées dos-à-dos à l'intérieur du bâti, les portes ( non représentées ) de ces cages étant situées sur les côtés longitudinaux du bâti, une mangeoire 4 longeant extérieurement l'extrêmité inférieure de toutes les portes d'une même série de cages, et un dispositif de distribution 5 déplaçable au-dessus de chaque mangeoire pour y introduire un aliment composé par exemple de grains, de granulés ou de farine.

Les deux dispositifs de distribution visibles sur la figure 2 ont la même structure. Ils sont fixés sur les côtés longitudinaux d'un chariot 6 comportant quatre galets 7 reposant sur deux rails de roulement 8 prévus à l'extrêmité supérieure du bâti. Le chariot 6 est déplaçable alternativement le long des rails 8 sous l'action d'un organe d'entraînement non représenté lui communiquant une vitesse réglable constante.

Chaque dispositif de distribution 5 comporte une trémie 9 destinée à recevoir l'aliment à distribuer, et une goulotte 10 dont l'entrée communique avec la trémie et dont la sortie débouche au-dessus du fond de la mangeoire correspondante 4.

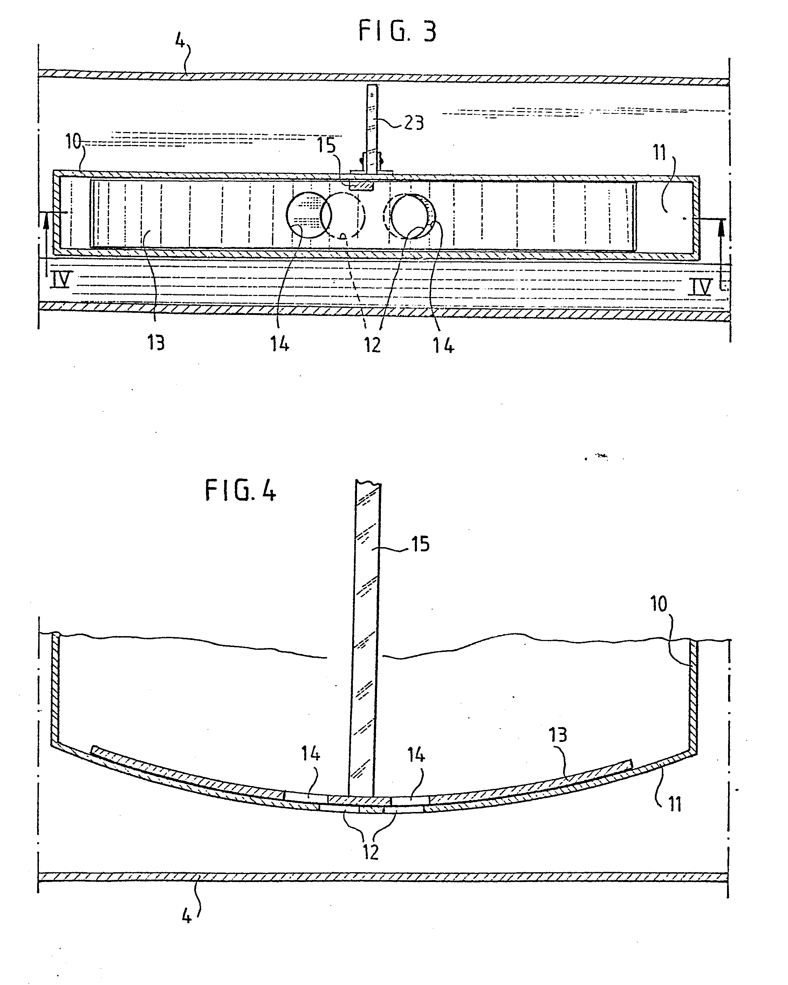

Conformément à l'invention, la sortie de chacune des goulottes 10 est fermée par une paroi perforée 11 comportant, dans sa partie médiane, deux orifices 12 de même section. Ces orifices,qui sont circulaires dans l'exemple visible sur la figure 3,mais pourraient être éventuellement oblongs, sont par ailleurs balayés par un volet 13 situé à l'intérieur de la goulotte correspondante 10.

En se référant au mode de réalisation représenté en particulier sur les figures 1 à 4, on remarquera que la paroi 11 et le volet 13 de chacun des dispositifs de distribution sont constitués par des plaques de forme cylindrique dont les génératrices sont perpendiculaires à l'axe longitudinal des mangeoires, la partie médiane de chacune des parois 11 étant celle qui est la plus proche du fond de la mangeoire correspondante.

On remarquera également que chaque volet 13 repose sur la face supérieure de la paroi correspondante 11 et comporte dans sa partie médiane, deux trous circulaires 14 dont le diamètre est égal à celui des orifices 12 et dont l'espacement est égal au diamètre de ceux-ci augmenté de leur espacement.

Lorsqu'un volet se déplace contre la paroi 11 sur laquelle il repose, il ménage avec les orifices 12 de celle-ci un passage à travers lequel l'aliment à distribuer peut s'écouler librement, ce passage ayant une section demeurant constamment égale à celle d'un orifice 12 ou d'un trou 14.

Chaque volet est fixé à l'extrêmité inférieure d'un bras 15 porté par un arbre 16 situé à l'intérieur de la trémie correspondante 9. L'arbre 16, qui est monté tourillonnant sur les parois longitudinales de ladite trémie est solidaire d'une tige 17 située à l'extérieur de celle-ci. Cette tige est articulée à l'une des extrêmités d'une bielle 18 dont l'autre extrêmité est articulée sur un maneton excentré 19 prévu sur une poulie 20 calée sur un arbre 21 susceptible d'être entraîné en rotation par un moteur 22 monté sur le chariot 6.

Comme on peut le voir sur la figure 2, les volets des deux dispositifs de distribution 5 sont entraînés par le même moteur. Comme les moyens assurant leur liaison cinématique avec ce moteur sont identiques, on conçoit aisèment que leurs mouvements alternatifs contre les parois 11 peuvent ainsi être commandés en synchronisme.

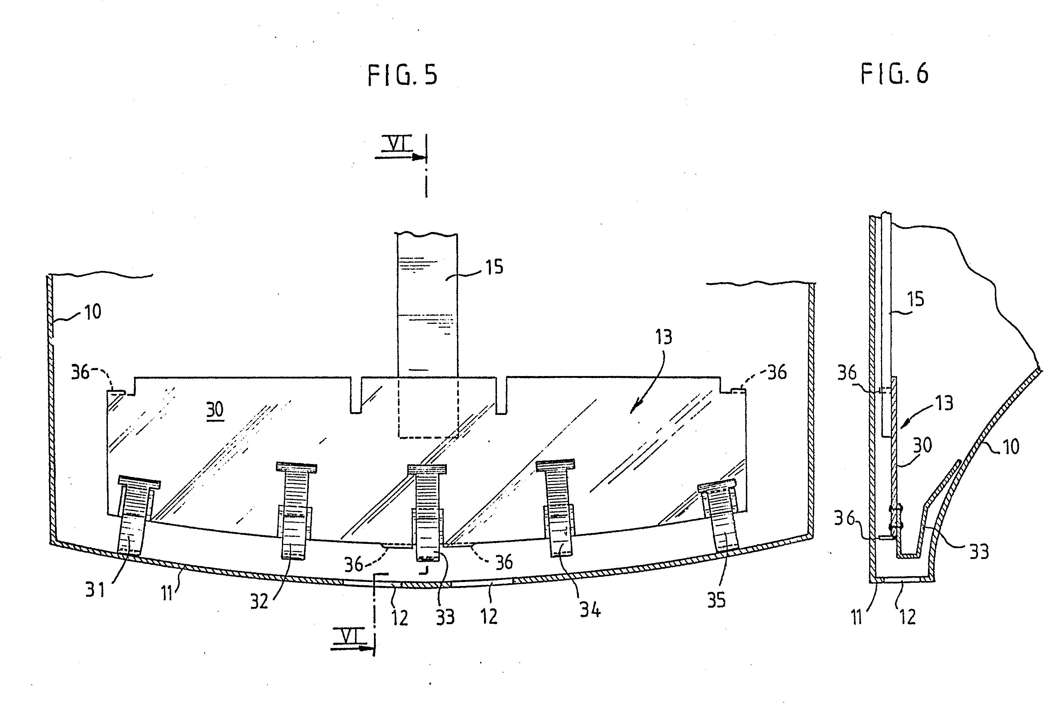

En se référant maintenant à la variante de réalisation représentée sur les deux figures 5 et 6, on retrouve la goulotte 10 dont la sortie est fermée par la paroi 11, celle-ci comportant deux orifices 12 pouvant être circulaires ou oblongs. On retrouve également le bras 15 à l'extrêmité inférieure duquel le volet 13 est fixé.

Le volet 13 visible sur les figures 5 et 6 a toutefois une structure différente de celle du volet visible sur les figures 1 à 4. En effet, il est constitué par une plaque verticale 30 portant cinq pattes latérales 31....35 s'étendant au dessus de la paroi 11, les pattes extrêmes 31 et 35 prenant seules appui contre la face supérieure de latite paroi.

Les pattes latérales ont sensiblement la forme d'un U dont la base est située à une hauteur inférieure à celle de la face inférieure de la plaque verticale 30. Elles sont fixées à celle-ci, par exemple par soudage ou rivetage, par l'intermédiaire de l'une de leurs branches, l'extrêmité libre de leur autre branche,qui est libre, étant adjacente à la paroi de la goulotte.

En se référant en particulier à la figure 5, on remarquera que la paroi 11 et la face inférieure de la plaque verticale 30 sont de forme cylindrique et centrées sur le même point, les génératrices de la paroi 11 étant ici encore perpendiculaires à l'axe longitudinal de la mangeoire ( non représentée )

On remarquera également que la base des pattes 32, 33 et 34 s'étend légèrement au dessus de la paroi 11 et est susceptible de venir périodiquement au dessus d'un orifice 12 lorsque le volet 13 se déplace alternativement sous la commande de moyens tels que ceux qui ont été décrits à propos du mode de réalisation selon les figures 1 à 4.

La variante de réalisation visible sur les figures 5 et 6 permet de limiter grandement les forces de frottement entre le volet 13 et la paroi 11.

Par ailleurs, les branches libres des pattes latérales du volet facilitent la descente vers la paroi 11 du produit à distribuer, en particulier si celui-ci est humide ou gras.

Pour éviter que la plaque verticale 30 frotte intempestivement contre la paroi de la goulotte 10, elle est pourvue de doigts 36 faisant saillie sur sa face qui est opposée à ses pattes latérales ( voir la figure 6 ).

En se référant plus particulièrement aux figures 2 et 3, on remarquera maintenant que la goulotte 10 de chaque dispositif de distribution est pourvue, sur sa paroi longitudinale tournée vers les cages, d'un racloir vertical 23 constitué d'un matériau relativement souple tel que le caoutchouc. Ce racloir, qui s'avance jusqu'au côté longitudinal de la mangeoire qui est adjacent aux cages 3, est situé à égale distance des deux orifices 12 réalisés dans la paroi 11, son côté inférieur étant situé dans le prolongement de celle-ci.

Bien entendu, un second racloir pourrait éventuellement être prévu sur l'autre paroi longitudinale de la goulotte.

On va maintenant décrire succinctement le fonctionnement de la batterie d'élevage en supposant que le chariot 6 se déplace dans le sens de la flèche F de la figure 1 et qu'en avant d'un dispositif de distribution 5, la couche d'aliment restant dans la mangeoire 4 présente un profil sinueux tel que celui représenté.

En se déplaçant, la paroi 11 réalise un aplanissement grossier de cette couche tandis que le volet 13, qui se déplace continuellement sous l'action du moteur 22, permet à l'aliment contenu dans la goulotte 10 de sortir dans la mangeoire 4 pour compenser la quantité consommée par les volailles . Le débit de l'aliment sortant par les orifices 12 est en effet réglé de telle sorte que l'épaisseur de la couche déposée sur le fond de la mangeoire, en arrière des orifices 12, demeure rigoureusement constante pendant le déplacement du chariot 6.

Revendications

1. Dispositif pour la distribution de produit en vrac,notamment d'aliment pour volailles, du type comprenant une trémie pour le stockage du produit, une goulotte de distribution dont l'entrée communique avec la trémie et dont la sortie débouche au dessus du fond d'une mangeoire, et des moyens pour déplacer la trémie et la goulotte le long de la mangeoire, caractérisé en ce que la sortie de la goulotte (10) est fermée par une paroi perforée (11) comportant au moins un orifice (12) balayé par un volet (13) situé à l'intérieur de la goulotte (10), ce volet étant déplaçable alternativement contre la paroi perforée (11).

2. Dispositif selon la revendication 1, caractérisé en ce que la paroi perforée (11) comporte deux orifices de même section (12) réalisés dans ou à proximité de sa partie médiane.

3. Dispositif selon la revendication 2, caractérisé en ce que le volet (13) repose contre la face interne de la paroi perforée (11) et comporte deux trous de même section (14) ménageant avec les orifices (12) de ladite paroi perforée un passage dont la section demeure constamment égale à celle de l'un de ces orifices.

4. Dispositif selon la revendication 3, caractérisé en ce que les trous (14) du volet (13) et les orifices (12) de la paroi perforée (11) sont circulaires et ont le même diamètre, l'espacement des trous ( 14 ) étant égal à leur diamètre augmenté de l'espacement des orifices (12).

5. Dispositif selon l'une quelconque des revendications 1 à 4, caractérisé en ce que la paroi perforée (11) et le volet (13) sont constitués par des plaques de forme cylindrique dont les génératrices sont perpendiculaires à l'axe longitudinal de la mangeoire (4), la partie médiane de la paroi perforée (11) étant celle qui est la plus proche du fond de la mangeoire.

6. Dispositif selon la revendication 1 ou 2, caractérisé en ce que le volet (13) est constitué par une plaque verticale (30) portant des pattes latérales (31,...35) s'étendant au dessus de la paroi perforée (11) et dont au moins l'une d'entre elles prend appui contre celle-ci.

7. Dispositif selon la revendication 6, caractérisé en ce que les pattes ( 31,...35) ont sensiblement la forme d'un U dont la base est située à une hauteur inférieure à celle de la face inférieure de la plaque verticale (30).

8. Dispositif selon la revendication 6 ou 7, caractérisé en ce que la paroi perforée (11) et la face inférieure de la plaque verticale (30) sont

8

0069662

de forme cylindrique et sont centrées sur le même point, les génératrices de la paroi perforée (11) étant perpendiculaires à l'axe longitudinal de la mangeoire (4) tandis que sa partie médiane est celle qui est la plus proche du fond de ladite mangecire.

9. Dispositif selon l'une quelconque des revendications 6 à 8, caractérisé en ce que les pattes ( 31,...35) sont fixées sur la plaque verticale (30) par l'intermédiaire de l'une de leurs branches, l'extrêmité libre de leur autre branche, qui est libre, étant adjacente à la paroi de la goulotte (10).

10. Dispositif selon l'une quelconque des revendications 1 à 9, caractérisé en ce que le volet (13) est fixé à l'extrêmité inférieure d'un bras (15) porté par un arbre (16) situé à l'intérieur de la trémie (9), cet arbre pivotant sous la commande d'une tige (17) reliée à un système bielle-manivelle (18,19,20) situé à l'extérieur de la trémie.

11. Dispositif selon l'une quelconque des revendications 1 à 10, caractérisé en ce que la goulotte (10) porte au moins un racloir extérieur (23) dont le côté inférieur est situé dans ou sensiblement dans le plan transversal médian de la paroi perforée (11).

FIG. 1

FIG. 2

FIG. 3

FIG. 4

FIG. 5

FIG. 6

VI

VI

15

10

36

30

13

36

31 11 32 36 33 12 12 34 35

36

15

36

13

30

36

33

11 12

3/3

0069662

**0069662**

Office européen
des brevets

**RAPPORT DE RECHERCHE EUROPEENNE**

Numéro de la demande

EP 82 40 1241

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-2 797 663 (BAILEY) *Figures 1-7; colonne 1, ligne 65 - colonne 4, ligne 4* | 1 | A 01 K 39/00 A 01 K 5/02 |
| | --- | | |
| Y | FR-A-2 308 308 (SCHMEING) *Figures 1-6; page 3, lignes 3-36* | 1,5,8, 10 | |
| | --- | | |
| A | GB-A-1 562 486 (WALTERS) *Figures 1-3,6; page 2, lignes 58-120; page 4, lignes 32-103* | 1,5,10 ,11 | |
| | --- | | |
| A | GB-A-2 063 041 (SALOPIAN) *Figures 1-3; page 2, lignes 26-45* | 1,11 | |
| | ----- | | |

**DOMAINES TECHNIQUES RECHERCHES (Int. Cl. 3)**

A 01 K

Le présent rapport de recherche a été établi pour toutes les revendications

| Lieu de la recherche | Date d'achèvement de la recherche | Examinateur |
|---|---|---|
| LA HAYE | 19-08-1982 | VILBIG K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82